# DEMANDE DE BREVET EUROPEEN

(11) **EP 2 325 511 A1**
(43) Date de publication de la demande: **25.05.2011**
(21) Numéro de dépôt: 10189816.1
(22) Date de dépôt: 03.11.2010
(51) Int. Cl.: F16D 11/10, F16H 3/12

(54) **Boîte de vitesses pilotee**

(30) Priorité: 24.11.2009 FR 0958293
(71) Demandeur: Peugeot Citroën Automobiles SA, 78140 Vélizy-Villacoublay (FR)
(72) Inventeur: Mitchell, Clement, 92250, LA GARENNE COLOMBES (FR)

(57) **Abrégé**

Boîte de vitesses pilotée comportant des pignons fous à rotation et ayant une première série de crabots (64). Au moins un manchon de la boîte comporte une deuxième série de crabots (63) pouvant venir en engrènement avec la première série de crabot de l'un des pignons fous en coulissant sur l'arbre portant le pignon fou. Les crabots d'au moins l'une des séries ont chacun leur face d'extrémité libre constituée par une rampe inclinée (80, 82). A l'engagement d'un rapport, quand le manchon coulisse pour être accouplé, les rampes inclinées guident les crabots des séries à engrènement. La série de crabots (63) dont la vitesse de rotation est déterminée par l'arbre primaire (26) tourne a une vitesse supérieure ou égale à la vitesse de rotation de la série de crabots (64) dont ladite vitesse est déterminée par l'arbre secondaire (28).

## Description

La présente invention est relative à une boîte de vitesses pilotée.

Plus particulièrement, l'invention concerne une boîte de vitesses pilotée comportant :
- un arbre primaire et un arbre secondaire,
- une pluralité de paires de pignons engrenés, déterminant chacune un rapport de démultiplication de marche avant et comportant chacune un pignon monté fixe à rotation sur l'un des arbres et un pignon qui est monté fou à rotation sur l'autre arbre et qui comporte une première série de crabots,
- au moins un manchon qui comporte une deuxième série de crabots pouvant venir en engrènement avec la première série de crabot de l'un des pignons fous en coulissant sur l'arbre portant le pignon fou pour accoupler le manchon audit pignon fou et rendre ce pignon solidaire à rotation dudit arbre.

Une telle boîte de vitesses est connue du document EP1995494. Dans ce document, la boîte de vitesses comporte des pignons fous ayant de grands jeux angulaire inter crabots, appelés aussi angles de fenêtre ou jeux de ré-attelage, avec des aménagements pour éviter les chocs alors qu'un rapport est engagé et pour faciliter l'éjection des crabots.

En effet, de manière générale, dans un dispositif de crabotage, avant le crabotage, il y a une grande fenêtre angulaire entre deux crabots consécutifs du pignon fou. La grande fenêtre doit être la plus grande possible pour que le passage des crabots du manchon entre les crabots du pignon fou se fasse le plus facilement possible, par exemple pour que le crabotage puisse avoir lieu lors de grands écarts de vitesses de rotation entre le pignon fou et le manchon.

Après le crabotage, il y a une petite fenêtre angulaire entre un crabot du manchon à sa position accouplée et les crabots consécutifs du pignon fou. La petite fenêtre doit être la plus petite possible afin de diminuer le jeu de ré-attelage des crabots entre eux lors d'un lâcher de pédale d'accélérateur.

Ces deux contraintes sont antagonistes, si bien qu'il est souvent nécessaire de faire des compromis entre diverses prestations telles que :
- rapidité de changement de rapports et efficacité des crabots lors des changements de vitesses montants ou descendants,
- minoration des chocs à engagement de rapport et lors des inversions de couple à l'alternance des accélérations et du frein moteur, par exemple en situation de suivi de file,
- minoration des efforts sur les fourchettes de commande de manchon lors du dé-crabotage.

La présente invention a notamment pour but de remédier aux inconvénients de l'art antérieur.

A cet effet, selon l'invention, a pour objet une boîte de vitesses pilotée comportant :
- un arbre primaire et un arbre secondaire,
- une pluralité de paires de pignons engrenés, déterminant chacune un rapport de démultiplication de marche avant et comportant chacune un pignon monté fixe à rotation sur l'un des arbres et un pignon qui est monté fou à rotation sur l'autre arbre et qui comporte une première série de crabots,
- au moins un manchon qui comporte une deuxième série de crabots pouvant venir en engrènement avec la première série de crabot de l'un des pignons fous en coulissant sur l'arbre portant le pignon fou pour accoupler le manchon audit pignon fou et rendre ce pignon solidaire à rotation dudit arbre.

Dans cette boîte de vitesses, les crabots d'au moins l'une des séries ont chacun leur face d'extrémité libre constituée par une rampe inclinée par rapport à l'axe dudit arbre portant le pignon fou et le manchon, de manière qu'à l'engagement d'un rapport, quand le manchon coulisse pour être accouplé au pignon fou, les rampes inclinées guident les crabots des deux séries à engrènement. Les rampes inclinées augmentent avantageusement de façon significative la fenêtre d'engagement, en plus de guider les crabots.

En outre, dans cette boîte de vitesses, la série de crabots dont la vitesse de rotation est déterminée par l'arbre primaire tourne a une vitesse qui est supérieure ou égale à la vitesse de rotation de la série de crabots dont ladite vitesse est déterminée par l'arbre secondaire.

Dans divers modes de réalisation de la boîte de vitesses selon l'invention, on peut éventuellement avoir recours en outre à l'une et/ou à l'autre des dispositions suivante :
- les crabots de la série de crabots solidaires du manchon et la série de crabots solidaires du pignon fou ont chacun leur face d'extrémité constituée par la rampe inclinée ;
- un organe de frottement est associé à l'un des rapports de démultiplication, cet organe de frottement pouvant temporairement transmettre un couple via ce rapport de démultiplication de manière que lors d'un changement de rapport montant, la série de crabots dont la vitesse de rotation est déterminée par l'arbre primaire voit sa vitesse diminuée en étant supérieure ou égale à la vitesse de rotation de la série de crabots dont ladite vitesse est déterminée par l'arbre secondaire ;
- la face rétro et la face de tirage de chacun des crabots pourvu de la rampe sont en contre dépouille par rapport à ladite rampe, pour assurer l'anti-lâcher desdits crabots.

En outre, l'invention à également pour objet un véhicule, notamment automobile, comportant des roues motrices, un moteur et une boîte de vitesses selon l'invention dont l'arbre primaire est relié au moteur et dont l'arbre secondaire est relié aux roues du véhicule.

Par ailleurs, l'invention a également pour objet un procédé de commande d'une boîte de vitesses conforme à l'invention, à l'engagement d'un rapport, quand le manchon coulisse pour être accouplé au pignon fou, la série de crabots dont la vitesse de rotation est déterminée par l'arbre primaire est entraînée pour avoir une vitesse supérieure ou égale à celle de la série de crabots dont la vitesse de rotation est déterminée par l'arbre secondaire, de manière que les rampes inclinées guident les crabots à engrènement.

Dans ce procédé, la boîte de vitesses selon l'invention comportant l'organe de frottement, à l'engagement d'un rapport montant, l'organe de frottement est brièvement activé afin de freiner l'arbre primaire en fonction de la vitesse de rotation de l'arbre secondaire, de manière que la série de crabots dont la vitesse de rotation est déterminée par l'arbre primaire soit entraînée à une vitesse cible à laquelle les crabots glissent sur les rampes puis s'engrènent lorsque le manchon du rapport à engager est commandé à coulissement pour être accouplé au pignon fou.

Dans ce procédé, à l'engagement d'un rapport descendant, l'arbre primaire est accéléré en fonction de la vitesse de rotation de l'arbre secondaire, de manière que la série de crabots dont la vitesse est déterminée par l'arbre primaire soit entraînée à une vitesse cible à laquelle les crabots glissent sur les rampes puis s'engrènent lorsque le manchon du rapport à engager est commandé à coulissement pour être accouplé au pignon fou.

D'autres buts, caractéristiques et avantages de l'invention apparaîtront au cours de la description suivante de plusieurs modes de réalisation, donnés à titre d'exemples non limitatifs, en regard des dessins joints sur lesquels :
- la figure 1 est une représentation schématique d'une chaîne de traction comportant une boîte de vitesses à six rapports selon l'invention ;
- la figure 2A est une représentation schématique en section des crabots selon l'invention à leur position découplée, au début d'un déplacement vers leur position accouplée, ces crabots étant solidaires d'un manchon et d'un pignon fou qui sont montés sur l'arbre primaire de la boîte de vitesses ;
- la figure 2B est une représentation schématique en section des crabots selon l'invention à leur position découplée, ces crabots étant solidaires d'un manchon et d'un pignon fou qui sont montés sur l'arbre secondaire de la boîte de vitesses ;
- les figures 3 et 4 sont des représentations schématiques en section des crabots de la figure 2A, lors de leur passage de leur position découplée et une position accouplée ;
- la figure 5 est une représentation schématique en section des crabots de la figure 2A, à leur position accouplée ;
- la figure 6 est une représentation schématique en section des crabots de la figure 2A, lors de leur passage de leur position accouplée à leur position découplée ;
- les figures 7 à 10 sont des représentations schématiques en section de quatre variantes de crabots selon l'invention.

Sur les différentes figures, les mêmes références désignent des éléments identiques ou similaires.

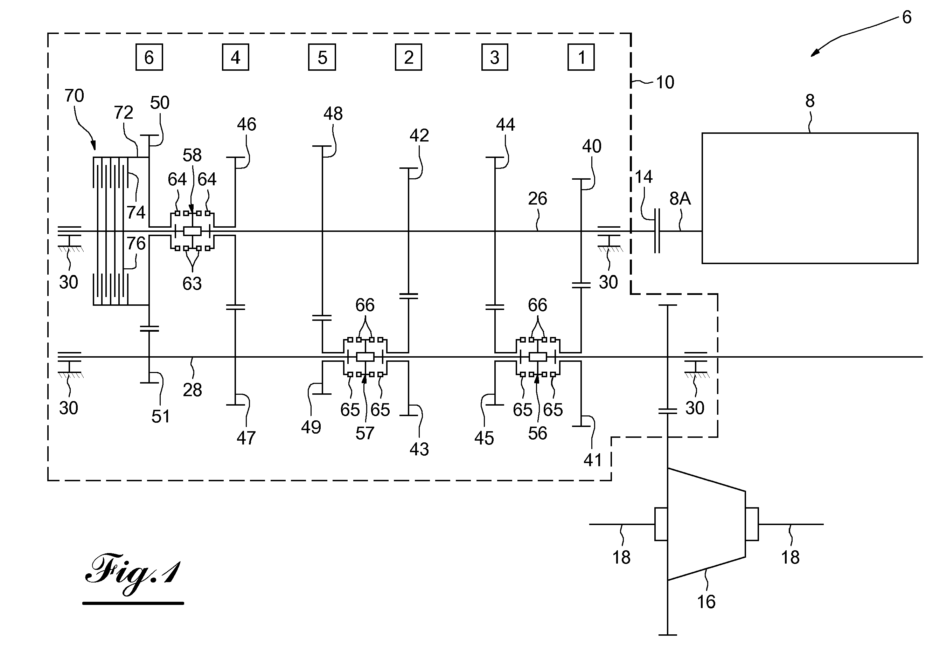

En se reportant à la figure 1, la référence 6 désigne un groupe moto propulseur ayant un moteur à combustion interne 8 présentant un arbre de sortie 8A et une boîte de vitesses pilotée 10, entre lesquels un embrayage piloté 14 est interposé. Des moyens de pilotage non représentés et connus en eux même, tels qu'un calculateur, pilotent le fonctionnement automatique de la boîte de vitesses et de l'embrayage 14 pour l'ouvrir et le fermer. Un différentiel 16 est disposé en sortie de la boîte de vitesses afin d'entraîner des roues motrices du véhicule par l'intermédiaire de deux transmissions 18.

La boîte de vitesses 10 comporte un arbre primaire 26 et un arbre secondaire 28 qui sont montés en rotation par l'intermédiaire de paliers dans un carter 30.

Selon le mode de réalisation représenté, les arbres 26 et 28 portent six paires de pignons engrenés en permanence, chaque paire déterminant un rapport de démultiplication. Les pignons référencés 40 et 41 sont pour le premier rapport de marche avant du véhicule ou première vitesse, 42 et 43 pour le deuxième rapport, 44 et 45 pour le troisième rapport, 46 et 47 pour le quatrième rapport, 48 et 49 pour le cinquième rapport, 50 et 51 pour le sixième rapport.

Chaque paire de pignons de marche avant comporte un pignon dit fixe qui est solidaire de l'un des arbres et un pignon dit fou monté en rotation sur l'autre des arbres par l'intermédiaire d'un palier. Ainsi, sur l'arbre primaire 26, les pignons fixes sont les pignons des premier 40, deuxième 42, troisième 44 et cinquième 48 rapports. Sur l'arbre secondaire 28, les pignons fixes sont les pignons des quatrième 47 et sixième 51 rapports.

La boîte de vitesses comporte trois manchons à crabots 56, 57 et 58 respectivement montés entre les pignons fous 41 et 45, entre les pignons fous 43 et 49 et entre les pignons fous 46 et 50 afin d'accoupler chacun de ces pignons fous et l'arbre 26 ou 28 qui lui correspond pour qu'un rapport soit engagé.

Ici, les pignons et crabots sont agencés dans la boîte de vitesses de manière que deux manchons différents puissent être manipulés simultanément lors d'un changement de rapport entre deux rapports numériquement successifs.

Chaque manchon 56, 57 et 58 est monté mobile axialement sur son arbre et est solidaire en rotation de son arbre, entre une position découplée de ses pignons fous et une position accouplée à l'un de ses pignons fous, en étant commandé par les moyens de pilotage et des actionneurs, non représentés, tels que des fourchettes liées aux manchons. Dans cette position accouplée, des crabots internes de chaque manchon 56, 57 et 58 sont en prise avec des crabots du pignon fou 41, 43, 45, 46, 49 et 50 correspondant. Pour pouvoir passer de sa position découplée à sa position accouplée, un système de synchronisation permet à chaque manchon 56, 57 ou 58 d'avoir sa vitesse de rotation ajustée, sans dépasser un différentiel maximum, par rapport à la vitesse de rotation du pignon 41, 43, 45, 46, 49 ou 50 avec lequel il doit s'engrener par l'intermédiaire des crabots correspondants.

Les crabots solidaires du manchon 58, dont la vitesse de rotation est toujours celle de l'arbre primaire 26, sont référencés 63. Les crabots solidaires du pignon fou 46 de quatrième rapport et les crabots solidaires du pignon fou 50 de sixième rapport, dont les vitesses sont fonction de celle de l'arbre secondaire 28, sont référencés 64.

Les crabots solidaires des pignons fous 41, 43, 45, et 49 respectivement du premier, du deuxième, du troisième et du cinquième rapport, dont les vitesses sont fonction de celle de l'arbre primaire 26, sont référencés 65. Les crabots solidaires des manchons 56 et 57, dont la vitesse de rotation est toujours celle de l'arbre secondaire 28, sont référencés 66.

Les actionneurs et les crabots ont une capacité de transmission d'effort déterminée, la géométrie des crabots ayant son influence sur les efforts lors d'un changement de rapport.

Le système de synchronisation comporte également un organe 70 de couplage par frottement, appelé pour plus de commodité « frotteur » dans la suite de la description, commandé pour ajuster les vitesses de rotation des arbres primaire 26 et secondaire 28 lors de changements de rapports. Ce frotteur 70 permet d'amener le manchon de crabotage du rapport à engager et le pignon à engrener du rapport à engager à des vitesses de rotation compatibles avant de réaliser le crabotage, tout en permettant la transmission de couple lors de ces changements de rapport.

Dans le mode de réalisation représenté à la figure 1, le frotteur 70 est associé au rapport le plus élevé, ici le rapport de sixième.

Le frotteur 70 peut être constitué par tout moyen permettant de transmettre le couple moteur et d'ajuster les vitesses de rotation du pignon 50 de sixième rapport et de l'arbre primaire 26, en gérant un éventuel différentiel de vitesse par une grande capacité de dissipation énergétique requise. Ici, le frotteur 70 est constitué par un embrayage de type multi-disques dont un corps 72 en forme générale de tambour a une extrémité solidaire du pignon 50. La paroi périphérique du tambour 72 délimite un logement interne cylindrique comportant des premiers disques 74 formés par une série de plaques radiales annulaires de freinage qui sont fixées à translation par leur périphérie à la face interne de la paroi périphérique et qui sont traversées coaxialement avec jeu par l'arbre primaire 26. En regard des premiers disques 74, le frotteur 70 comporte une série de deuxièmes disques 76 qui sont solidaires de l'arbre primaire 26. Quand le frotteur est inactif, les disques 74, 76 ne sont pas en contact. Des organes d'actionnement, non représentés, par exemple électromagnétiques, permettent de rendre le frotteur 70 actif, en rapprochant les disques 74, 76 pour les amener en contact de friction pour rapprocher les vitesses de rotation de l'arbre primaire 26 et du pignon 50, ce pignon étant celui qui a la vitesse de rotation la plus lente en rapport engagé.

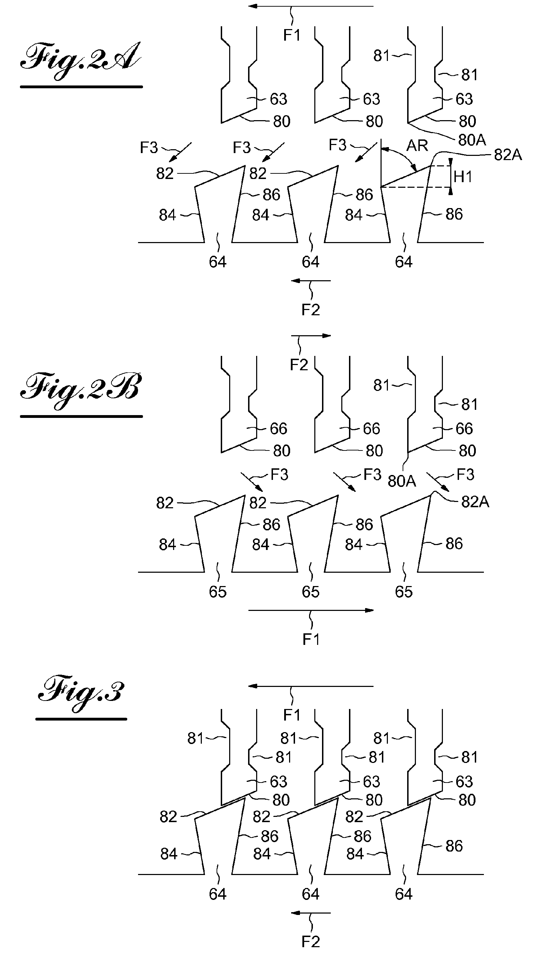

Dans le mode de réalisation représenté aux figures 2 à 6, chacun des crabots 63, 66 des manchons 56, 57, 58 est dissymétrique en ayant sa face d'extrémité libre constituée par une rampe 80 inclinée par rapport à l'axe du manchon et du pignon fou associé, avec une arête d'extrémité 80A. Le reste de ces crabots 63, 66 présente une forme de type connue dans des synchroniseurs de type à bague de synchronisation, avec une entaille 81 à mi hauteur qui est ici adaptée à la longueur et à la forme des crabots 64 correspondants.

Dans le mode de réalisation représenté aux figures 2 à 6, chacun des crabots 64, 65 solidaires des pignons fous 41, 43, 45, 46, 49, 50 est dissymétrique en ayant sa face d'extrémité libre constituée par une rampe 82 inclinée par rapport à l'axe du manchon et du pignon fou associé, avec une arête d'extrémité 82A. En outre, les crabots 64, 65 solidaires des pignons fous 41, 43, 45, 46, 49, 50 ont leur face radiale dite face rétro 84 et leur face radiale dite face de tirage 86 qui ont un angle d'anti-lâcher par exemple de dix degrés, c'est à dire qu'elles sont en contre dépouille par rapport à la rampe 80, l'angle d'anti-lâcher pouvant être dans un intervalle de 1 degré à 15 degrés

Cette géométrie permet d'éviter un découplage intempestif des crabots sous couple quand ils sont engrenés alors que les roues du véhicule et le moteur 8 doivent être accouplés.

Il est à remarquer que dans la réalité, les arêtes 80A et 82A ne sont pas aussi vive que ne le représente schématiquement les figures.

Les rampes 80, 82 des crabots 63, 66 des manchons 56, 57, 58 et des crabots 64, 65 des pignons fous 41, 43, 45, 46, 49, 50 sont parallèles et ont leur hauteur H1 comprise entre un quart et un tiers de la hauteur des face de tirage 86, soit sensiblement un tiers à la moitié de la hauteur des face rétro 84. L'angle de rampe AR est par exemple d'environ 60 degrés. Il peut être dans un intervalle de 45 degrés à 89 degrés, notamment selon l'encombrement disponible.

Différentes phases de fonctionnement du système de synchronisation utilisant les crabots selon l'invention vont être décrites maintenant.

Durant ces phases, chaque ouverture et chaque fermeture de l'embrayage 14 sont effectuées par le biais des moyens d'actionnement de l'embrayage qui sont commandés par les moyens de pilotage. Le frotteur 70 est actionné par les organes d'actionnement, sous la commande des moyens de pilotage. Les manchons 56, 57, 58 sont translatés par les actionneurs, sous la commande des moyens de pilotage.

Lors d'un changement de rapport, par exemple lors d'une montée de rapport avec passage de cinquième en sixième, le manchon 57 du rapport à dégager passe d'une position accouplée à une position découplée et le manchon 58 du rapport à engager passe d'une position découplée à une position accouplée.

Divers états du passage du manchon 58 de sa position découplée à sa position accouplée sont représentés en considérant les figures 2A, 3, 4 et 5 dans cet ordre selon l'avancement du changement de rapport.

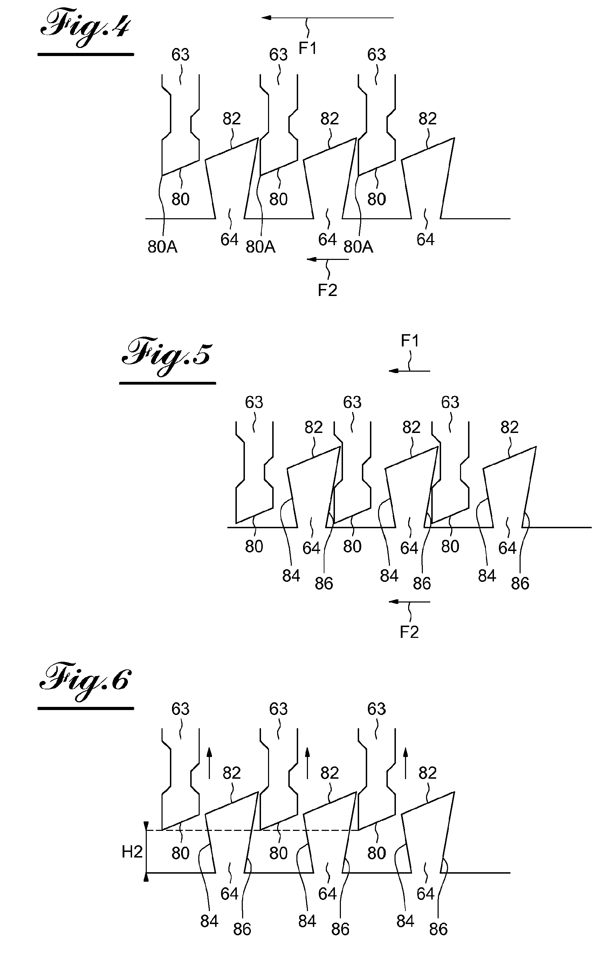

Divers états du passage du manchon 57 de sa position accouplée à sa position découplée seront décrits en considérant la figure 6.

Lors des changements de rapport montant, le manchon du rapport à engager et le manchon du rapport à dégager peuvent être actionnés simultanément.

Dès un premier instant de la montée de rapport, l'embrayage 14 est ouvert au moins partiellement, le frotteur 70 est brièvement activé afin de freiner l'arbre primaire 26 en fonction de la vitesse de rotation de l'arbre secondaire 28 dictée par la vitesse de rotation des roues du véhicule, par l'intermédiaire de la démultiplication des pignons 50 et 51. Au même instant, alors que le manchon 58 de sixième rapport est à sa position découplée, ce dernier est commandé à engagement de rapport par translation vers le pignon fou 50, selon l'axe de l'arbre primaire 26.

Le frotteur 70 est activé de manière que, compte tenu d'un glissement éventuel de ses disques et des démultiplications des engrenages de sixième et de cinquième rapport, le différentiel de vitesse de rotation de l'arbre secondaire 28 et de l'arbre primaire 26, soit ajusté à une cible. Cette cible de différentiel de vitesse est telle que les crabots 63 solidaires du manchon 58 entraîné par l'arbre primaire 26 tournent plus vite que les crabots 64 solidaires du pignon fou 50 du sixième rapport à engager, comme symbolisé respectivement par les flèches F1 et F2 à la figure 2A.

Compte tenu d'une part du rapprochement commandé des crabots, et d'autre part du différentiel positif de vitesse entre les crabots 63 et les crabots 64 du rapport à engager, lesdits crabots se rapprochent avec un déplacement mutuel incliné symbolisé par les flèches F3 à la figure 2A. Les rampes 80, 82 des crabots 63, 64 sont rapprochées jusqu'à ce qu'elles glissent les unes contre les autres, comme représenté à la figure 3.

Les rampes 80, 82 glissent l'une contre l'autre en favorisant le crabotage puisqu'elles guident les crabots 63 solidaires du manchon 58 du rapport à engager en direction des crabots 64 correspondants. Lesdits crabots 63 continuent leur trajectoire jusqu'à ce que leurs arêtes d'extrémité 80A viennent au plus près, voire au contact, des faces de tirage 86 correspondantes des crabots 64, sensiblement à mi hauteur de ces dernières, sans possibilité d'auto-éjection, comme représenté à la figure 4.

Le crabotage complet ou engrènement complet, représenté à la figure 5, intervient sur la lancée, dans un dernier instant de la montée de rapport. Cette fin de crabotage est aussi favorisée par l'angle d'anti-lâcher. A ce dernier instant de la montée de rapport, le frotteur 70 peut être inactif et l'embrayage 14 peut être fermé ou, pour employer une autre terminologie, embrayé.

Compte tenu du guidage par glissement des rampes 80, 82, le jeu de ré-attelage séparant les crabots consécutifs peut être réduit au strict nécessaire permettant le crabotage et le dé-crabotage par passage incliné des crabots solidaires des manchons, entre les crabots solidaires des pignons fous. Ce jeu de ré-attelage réduit permet d'éviter des chocs lors de l'inversion du couple transmis qui est positif à l'accélération et négatif en frein moteur. Une source d'inconfort est ainsi évitée en situation type suivi de file à laquelle, à chaque inversion de couple, les crabots solidaires des manchons sont alternativement en appui sur les faces rétro 84 ou sur les faces de tirage 86 correspondantes.

Dans le cas représenté à la figure 2B, pour les crabots 66 solidaires des manchons 56, 57 dont la vitesse de rotation est celle de l'arbre secondaire 28 et pour les crabots 65 solidaires des pignons fous 41, 43, 45, 49 qui sont portés par l'arbre secondaire 28, le fonctionnement de l'engagement à crabotage est sur le même principe qu'expliqué précédemment en relation avec les figures 2A, 3, 4 et 5. Lesdits crabots 65, dont la vitesse de rotation est fonction de l'arbre primaire 26 compte tenu de leur entraînement par les pignons fixes 40, 42, 44, 48, doivent avoir une vitesse supérieure à celle desdits crabots 66 solidaires des manchons 56, 57.

L'actionnement du manchon du rapport à engager ayant été détaillé, ci-dessus, c'est maintenant l'actionnement du manchon du rapport à dégager qui va être détaillé.

Dans l'exemple pris en compte, d'une part le découplage du moteur 8 par ouverture de l'embrayage 14 et d'autre part le freinage de l'arbre primaire 26 lorsque le frotteur 70 est brièvement activé réduisent le couple appliqué aux crabots 66, 65 respectivement du manchon 57 et du pignon 49 et diminuent les efforts d'anti-lâcher desdits crabots. Ainsi, les crabots 66, 65 respectivement du manchon 57 et du pignon 49 ayant leur lâcher favorisé, ils peuvent passer de leur position complètement accouplée, comme représenté à la figure 5, à leur position découplée.

En outre, lorsque le frotteur 70 est brièvement activé, comme le couple à transmettre par les crabots 65, 66 passe de positif à nul ou négatif, l'effort à appliquer par les actionneurs sur la fourchette de commande du manchon 57 est très faible pour permettre le dé-crabotage. En effet, sous fort couple transmis, il serait difficile de déplacer le manchon à cause de l'angle d'anti-lâcher, la force axiale d'extraction étant proportionnelle au couple transmis et à l'angle d'anti-lâcher. Dans le cadre de l'utilisation de la présente invention, il est possible de découpler les crabots sus couple.

Lors du lâcher desdits crabots au dé-crabotage, le risque de choc des crabots 66 sur la face rétro 84 est minimisé car l'inclinaison des rampes 80, 82 permet un découplage des crabots sur une course courte, comme représenté en comparant la figure 5 et la figure 6. En effet, la hauteur H2 de denture côté face de tirage 86 est réduite (figure 6) par rapport à la hauteur maximale des crabots, puisqu'elle représente environ la moitié de cette hauteur maximale.

Dans le cas de changements de rapports de type descendant sous couple moteur, par exemple pour passer du quatrième rapport au troisième rapport, le manchon 58 du rapport à dégager passe d'une position accouplée à une position découplée et le manchon 56 du rapport à engager passe d'une position découplée à une position accouplée.

Concernant l'engagement des crabots 66 solidaires du manchon 56 dans les crabots 65 solidaires du pignon 45 du troisième rapport à engager, le différentiel de vitesse de rotation de l'arbre secondaire 28 et de l'arbre primaire 26 doit, conformément au principe de fonctionnement décrit précédemment, être tel que les crabots 65 solidaire du pignon fou 45 dont la vitesse est déterminée par la vitesse de l'arbre primaire 26 tournent plus vite que les crabots 66 solidaires du manchon 56 du troisième rapport à engager, dont la vitesse est déterminée par la vitesse de l'arbre secondaire 28. L'arbre primaire 26 est le cas échéant accéléré avant engagement du troisième rapport, comme il sera expliqué ultérieurement.

Concernant le dé-crabotage des crabots 63 solidaires du manchon 58 à dégager des crabots 64 solidaires du pignon 46 du quatrième rapport à dégager, il faut, comme expliqué précédemment pour le dégagement du deuxième rapport, une annulation ou une inversion de couple à transmettre.

Le changement de rapport descendant s'effectue de la manière suivante.

Dans une première étape, l'embrayage 14 est débrayé ou mis en phase de glissement et le frotteur 70 est activé pour faire chuter le couple à transmettre par les crabots du rapport à dégager. Il n'y a alors plus ou peu d'effort d'anti-lâcher susceptible d'empêcher la translation du manchon 58 sous l'action des fourchettes pour que ses crabots passent de leur position accouplée à leur position découplée.

Dans une deuxième étape, ledit manchon 58 est actionné à désengagement, ce qui désengage le quatrième rapport. Le frotteur 70 est rendu inactif.

Pour que l'engagement du troisième rapport puisse avoir lieu, il faut que d'une part les crabots 65, dont la vitesse est fonction de l'arbre primaire 26, tournent plus vite que les crabots 66, dont la vitesse est fonction de l'arbre secondaire 28, et que d'autre part lesdits crabots 65 et 66 tournent à des vitesses compatibles, le différentiel de vitesse ne devant par exemple pas dépasser 250 à 300 tours par minute.

Ce différentiel de vitesse est contrôlé par l'intermédiaire des moyens de pilotages et de capteur de vitesse des arbres par exemple.

Si le différentiel de vitesse respecte les conditions ci-dessus exposées, l'engagement du troisième rapport est déclenché, le manchon 56 étant commandé à crabotage avec le pignon fou 45. Le changement de rapport, de quatrième à troisième, est alors terminé suite à la fermeture de l'embrayage 14.

Dans la troisième étape ci-dessus décrite, si le différentiel de vitesse ne respecte pas les conditions ci-dessus exposées l'embrayage 14 est mis en phase de fermeture pour être ré-accouplé au moteur 8.

Dans une quatrième étape, le moteur 8 est accéléré pour relancer le régime de l'arbre primaire 26, jusqu'à ce que ce dernier atteigne une vitesse cible correspondant aux conditions ci-dessus. Par l'intermédiaire du pignon 44 du rapport à engager, la relance du régime de l'arbre primaire 26 accélère le pignon fou 45 dont les crabots 65 tournent alors à une vitesse compatible avec celle des crabots 66 du manchon 56, les crabots 65 tournant plus vite que les crabots 66.

Dans une cinquième étape, l'engagement du troisième rapport est déclenché, le manchon 56 étant commandé à crabotage avec le pignon fou 45.

Le changement de rapport, de quatrième à troisième, est alors terminé.

Avantageusement les rampes 80, 82 permettent un crabotage même si un différentiel de vitesse est important entre les crabots solidaires du pignon fou du rapport à engager et les crabots solidaires du manchon associé à ce rapport, un différentiel important pouvant par exemple atteindre 250 à 300 tours par minute.

Avantageusement les rampes 80, 82 permettent aussi un crabotage même si les crabots solidaires du pignon fou du rapport à engager et les crabots solidaires du manchon associé à ce rapport tournent à la même vitesse, l'effort axial de mise en coulissement des manchons étant suffisant pour entraîner un glissement mutuel des rampes.

Avantageusement, la boîte de vitesses selon l'invention permet des engagements de rapport sous couple moteur, l'embrayage 14 pouvant être glissant et transmettre du couple moteur lors dudit engagement, sans pour autant que soient créés des chocs inconfortables pour les occupants du véhicule ou préjudiciables à la longévité de la boîte de vitesses.

Avantageusement les crabots selon l'invention associés à l'organe de friction 70, appelé « frotteur » dans la description qui précède, permettent les passages de rapport sous couple moteur par dérivation de couple par un rapport de démultiplication supérieur, le « frotteur » permettant d'obtenir un différentiel de régime des crabots garantis dans un sens déterminé, quel que soit le type de changement de rapport de type montée ou descente de rapport.

Avantageusement, compte tenu de leur géométrie, les crabots selon l'invention permettent un désengagement rapide des rapports. En effet, leur face de rétro 84 sont beaucoup plus petites que leur face de tirage 86, du fait des rampes 82. En outre, les pentes 80 rendent aussi le désengagement plus facile.

Avantageusement les rampes 80, 82 permettent l'utilisation de crabots à jeu de ré-attelage peu important.

Avantageusement, compte tenu de leur géométrie, les crabots selon l'invention associés aux manchons et aux pignons fous sont plus compacts que des synchroniseurs à friction traditionnels. Ils permettent des changements de rapport plus rapides et confortables.

Avantageusement, compte tenu de leur géométrie, les crabots selon l'invention peuvent être fabriqués selon un procédé identique à celui utilisé pour les crabots classiques de synchroniseur classique.

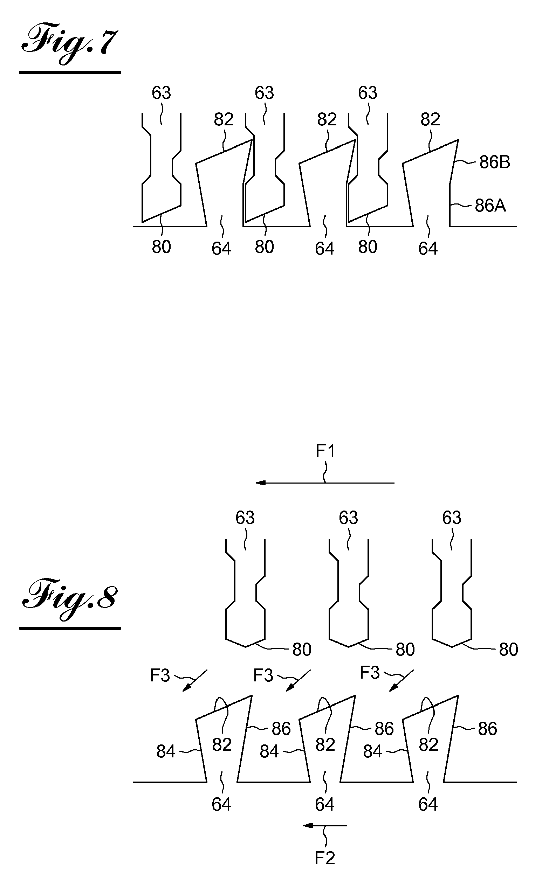

Dans la variante de réalisation représentée à la figure 7, afin de faciliter le cheminement des crabots 63, 66 solidaires du manchon du rapport à dégager pour la phase de dé-crabotage, la face de tirage 86 correspondante est en deux pans pour ne pas utiliser d'anti-lâcher sur la première partie de la course de dé-crabotage. Une partie dite basse 86A de la face de tirage 86, au plus proche du pied de crabot, est droite et constitue le premier pan. Seulement une partie dite haute 86B de la face de tirage 86, constituant le deuxième pan forant anti-lâcher, est en contre dépouille par rapport à la rampe 82. Ce deuxième pan 86B est en regard de l'entaille 81 du crabot 63, 66 correspondant lorsque le manchon est à sa position accouplée.

Dans la variante de réalisation représentée à la figure 8, seuls les crabots 64 solidaires des pignons fous sont dissymétriques en ayant une rampe 82 complète sur toute l'extrémité libre du crabot. Les crabots 63 solidaires des manchons ont leur extrémité qui est de type symétrique comme ceux des synchroniseurs de type à bague de synchronisation. Ici, la rampe 80 des crabots 63 est courte, sur la moitié de l'extrémité libre du crabot, l'autre moitié de l'extrémité libre étant à inclinaison inversée par rapport à la rampe 80, par symétrie.

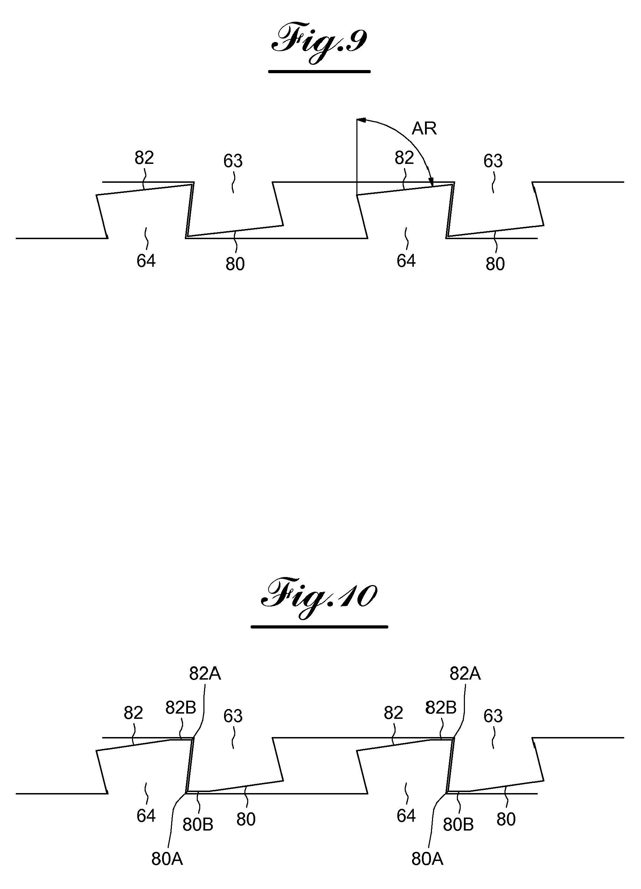

Dans la variante de réalisation représentée à la figure 9, les crabots sont de type moto, moins hauts et avec jeu de ré-attelage de l'ordre de deux fois la longueur du crabot. Dans cette variante, l'angle de rampe AR est de l'ordre de quatre-vingts degrés, si bien que le crabot est plutôt plat.

Dans la variante de réalisation représentée à la figure 10, les crabots sont aussi de type moto, et leurs pentes 80, 82 comportent un plat 80B, 82B à proximité de l'arête d'extrémité 80A, 82A, pour rendre les crabots plus solides et limiter les risques de rupture par choc en fond de crabot, ce fond pouvant aussi être appelé pied de crabot.

## Revendications

1. Boîte de vitesses pilotée comportant .
- un arbre primaire et un arbre secondaire,
- une pluralité de paires de pignons engrenés, déterminant chacune un rapport de démultiplication de marche avant et comportant chacune un pignon (40, 42, 44, 47, 48, 51) monté fixe à rotation sur l'un des arbres et un pignon (41, 43, 45, 46, 49, 50) qui est monté fou à rotation sur l'autre arbre et qui comporte une première série de crabots (64, 65),
- au moins un manchon (56, 57, 58) qui comporte une deuxième série de crabots (63, 66) pouvant venir en engrènement avec la première série de crabot de l'un des pignons fous en coulissant sur l'arbre portant le pignon fou pour accoupler le manchon audit pignon fou et rendre ce pignon solidaire à rotation dudit arbre,
**caractérisée en ce que** les crabots (63, 64, 65, 66) d'au moins l'une des séries ont chacun leur face d'extrémité libre constituée par une rampe inclinée (80, 82) par rapport à l'axe dudit arbre (26, 28) portant le pignon fou (41, 43, 45, 46, 49, 50) et le manchon (56, 57, 58), de manière qu'à l'engagement d'un rapport, quand le manchon coulisse pour être accouplé au pignon fou, les rampes inclinées guident les crabots des deux séries à engrènement et **en ce que** la série de crabots (63, 65) dont la vitesse de rotation est déterminée par l'arbre primaire (26) tourne a une vitesse qui est supérieure ou égale à la vitesse de rotation de la série de crabots (64, 66) dont ladite vitesse est déterminée par l'arbre secondaire (28).

2. Boîte de vitesses selon la revendication 1, **caractérisée en ce que** les crabots (63, 66) de la série de crabots solidaires du manchon (56, 57, 58) et les crabots (64, 65) de la série de crabots solidaires du pignon fou (41, 43, 45, 46, 49, 50) ont chacun leur face d'extrémité constituée par la rampe inclinée (80, 82).

3. Boîte de vitesses selon l'une quelconque des revendications 1 à 2, **caractérisée en ce qu'**elle comporte un organe de frottement (70) associé à l'un des rapports de démultiplication, cet organe de frottement pouvant temporairement transmettre un couple via ce rapport de démultiplication de manière que lors d'un changement de rapport montant, la série de crabots (63, 65) dont la vitesse de rotation est déterminée par l'arbre primaire (26) voit sa vitesse diminuée en étant supérieure ou égale à la vitesse de rotation de la série de crabots (64, 66) dont ladite vitesse est déterminée par l'arbre secondaire (28).

4. Boîte de vitesses selon l'une quelconque des revendications 1 à 3, **caractérisée en ce que** les faces radiales (84, 86) de chacun des crabots pourvu de la rampe (80, 82) sont en contre dépouille par rapport à ladite rampe, pour assurer l'anti-lâcher desdits crabots.

5. Véhicule comportant des roues motrices, un moteur (8) et une boîte de vitesses (10) qui est conforme l'une quelconque des revendications 1 à 4, dont l'arbre primaire (26) est relié au moteur (8) et dont l'arbre secondaire (28) est relié aux roues motrices.

6. Procédé de commande d'une boîte de vitesses (10) conforme à l'une quelconque des revendications 1 à 4, **caractérisé en ce que**, à l'engagement d'un rapport, quand le manchon (56, 57, 58) coulisse pour être accouplé au pignon fou, la série de crabots (63, 65) dont la vitesse de rotation est déterminée par l'arbre primaire (26) est entraînée pour avoir une vitesse supérieure ou égale à celle de la série de crabots (64, 66) dont la vitesse de rotation est déterminée par l'arbre secondaire (28), de manière que les rampes inclinées (80, 82) guident les crabots à engrènement.

7. Procédé selon la revendication 6, la boîte de vitesses étant conforme à la revendication 3, dans lequel à l'engagement d'un rapport montant, l'organe de frottement (70) est brièvement activé afin de freiner l'arbre primaire (26) en fonction de la vitesse de rotation de l'arbre secondaire (28), de manière que la série de crabots (63, 65) dont la vitesse de rotation est déterminée par l'arbre primaire (26) soit entraînée à une vitesse cible à laquelle les crabots glissent sur les rampes (80, 82) puis s'engrènent lorsque le manchon du rapport à engager est commandé à coulissement pour être accouplé au pignon fou.

8. Procédé selon la revendication 7, dans lequel à l'engagement d'un rapport descendant, l'arbre primaire (26) est accéléré en fonction de la vitesse de rotation de l'arbre secondaire (28), de manière que la série de crabots (63, 65) dont la vitesse est déterminée par l'arbre primaire (26) soit entraînée à une vitesse cible à laquelle les crabots glissent sur les rampes (80, 82) puis s'engrènent lorsque le manchon du rapport à engager est commandé à coulissement pour être accouplé au pignon fou.
